# EUROPÄISCHE PATENTSCHRIFT

(11) **EP 1 316 864 B1**
(45) Veröffentlichungstag und Bekanntmachung des Hinweises auf die Patenterteilung: **02.01.2008**
(21) Anmeldenummer: 02025892.7
(22) Anmeldetag: 20.11.2002
(51) Int. Cl.: G05B 19/00, G06K 7/10, G06K 19/06

(54) **Rechnergestützte Bereitstellung von Materialien beim Aufzugsbau**
Computer-aided provisioning of materials in lift construction
Mise à disposition de matériels lors de construction d'ascenseur assisté par ordinateur

(30) Priorität: 30.11.2001 EP 01811160
(43) Veröffentlichungstag der Anmeldung: 04.06.2003
(73) Patentinhaber: INVENTIO AG, 6052 Hergiswil (CH)
(72) Erfinder: Begle, Guntram, Dipl. Masch.-Ing., 6403 Küssnacht a.Rigi (CH)

(56) Entgegenhaltungen:
- EP-A- 0 281 142
- WO-A-01/79988
- WO-A-01/82009
- US-A- 4 074 120

## Beschreibung

Die Erfindung bezieht sich auf ein Verfahren, ein System und ein Computerprogrammprodukt zur rechnergestützten Bereitstellung von Materialien beim Aufzugsbau gemäss der Definition der Patentansprüche.

US-4074120 offenbart ein Verfahren zum automatischen Annehmen, Lagern und Abrufen von Waren in einem Warenhaus, bei dem eingegangene Waren von einer entfernten Zentrale aus elektronisch identifiziert werden, mit einer Warenhausadresse versehen und im Warenhaus unter der Warenhausadresse eingelagert werden. Umgekehrt werden verlangte Waren mit ihrer Warenhausadresse identifiziert und aus dem Warenhaus abgerufen.

WO01/82009 offenbart ein Verfahren zum Kontrollieren eines automatischen mehrstufigen Prozesses der Leiterplattenherstellung, bei dem an jeder Prozessstufe Eingangsmaterialien empfangen, diese verarbeitet und Ausgangsmaterialien ausgegeben werden. Bereitgestellte Materialien werden mit les- und beschreibbaren Radiofrequenz-Transpondern versehen, was eine Kontrolle der richtigen Materialmengen und -qualität einer jeden Prozessstufe erlaubt.

Beim Aufzugsbau werden Aufzugsanlagen auf einer Baustelle installiert bzw. modernisiert. Für diesen Zweck werden Materialien in einem Verfahren bereitgestellt. Unter Bereitstellung von Materialien wird eine vollständige Wertschöpfungskette bestehend aus Auftragsbearbeitung, Fertigung, Zustellung, Kommissionierung, Lieferung, Montage und Wartung von Materialien verstanden. Materialien werden bei verschiedensten Zulieferern fabriziert und als Packungen an Kommissionierungslager zugestellt. Aus den Kommissionierungslagern heraus erfolgt die Kommissionierung, d.h. Zusammenstellung von Materialien auf Paletten und die Lieferung von Paletten auf die Baustelle. Die Materialien werden in Aufzugsanlagen montiert. In Aufzugsanlagen verbaute Materialien werden gewartet.

Nachteilig an diesem Verfahren ist, dass bei der Fertigung der Materialien bei den Zustellern die Materialien nicht eindeutig zuordenbar und identifizierbar sind, was gerade zu Zwecken der Qualitätskontrolle von Bedeutung ist.

Nachteilig ist des Weiteren, dass die ins Kommissionierungslager zugestellten Packungen zu Prüfzwecken des Inhaltes geöffnet werden müssen.

Nachteilig ist auch, dass auf der Baustelle die Lokalisierung der einzelnen Materialien in den gelieferten Paletten zeitaufwändig ist.

Nachteilig ist zudem, dass die Identifikation der gelieferten bzw. verbauten Materialien nicht eindeutig ist.

Nachteilig ist ferner, dass die Montage der gelieferten Materialien fehlerträchtig ist, bei Unachtsamkeit werden Materialien falsch verbaut.

Nachteilig ist schliesslich, das die Identifikation von Ersatzteilen im Unterhalt fehlerträchtig und zeitaufwändig ist.

Aufgabe der vorliegenden Erfindung ist es ein Verfahren, ein System und ein Computerprogrammprodukt bereit zustellen, welches die vorgenannten Nachteile vermeidet.

Diese Aufgabe wird durch die Erfindung gemäss der Definition der Patentansprüche gelöst.

Die Erfindung besteht in einer rechnergestützten Bereitstellung von Materialien beim Aufzugsbau, wobei Materialien mit einem les- bzw. beschreibbaren Informationsgeber versehen werden, diese Materialien bereitgestellt werden, Informationen des Informationsgebers rechnergestützt geschrieben bzw. gelesen werden und diese Informationen rechnergestützt überprüft werden.

Vorteilhafterweise wird/werden einzelne Materialien bzw. deren Komponenten und/oder eine Verpackung von Materialien und/oder eine Palette von zusammengestellten Materialien mit einem Informationsgeber versehen. Vorteilhafterweise ist der Informationsgeber eine kontaktlose Chipkarte, mit in einem Datenspeicher gespeicherten Informationen, die von einer Lese/Schreibvorrichtung gelesen bzw. geschrieben werden. Vorteilhafterweise ist der Informationsgeber eine kostengünstig herstellbare Chipkarte, in Form eines elastischen Folien-Transponders, der auf Basis von Radiofrequenz (RF) kommuniziert. Der Informationsgeber kann an jeder Stelle der Wertschöpfungskette beim Aufzugsbau rechnergestützt gelesen bzw. beschrieben werden, d.h. bei der Auftragsbearbeitung, Fertigung, Zustellung, Kommissionierung, Lieferung, Montage und Wartung der Materialien.

Vorteilhafterweise werden die Informationen zur rechnergestützten Überprüfung mit mindestens einer in mindestens einer Datenbank gespeicherten Kontrollliste verglichen. Die von der Lese/Schreibvorrichtung eingelesenen Informationen werden an mindestens eine Auswerteeinheit übermittelt und von der Auswerteeinheit gemäss mindestens einem Computerprogrammprodukt mit der Kontrollliste verglichen. Das Computerprogrammprodukt vergleicht, ob diese Informationen mit entsprechenden Angaben der Kontrollliste übereinstimmen. Als Ergebnis dieser Überprüfung gibt die Auswerteeinheit ein positives bzw. negatives Antwortsignal aus.

Mit der Erfindung lassen sich die einzelnen Stufen der Wertschöpfungskette beim Aufzugsbau kontrollieren und auf allen Stufen dieser Wertschöpfungskette lässt sich die Qualität erhöhen. Die in der Datenbank gespeicherten Angaben der Kontrollliste führen zu Transparenz, was die Verwaltungsstrukturen vereinfacht.

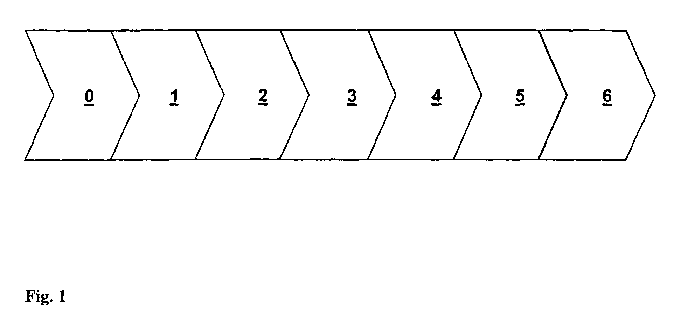

Im folgenden wird die Erfindung anhand einer beispielhaften Ausführungsform gemäss **Fig. 1** im Detail erläutert. **Fig. 1** zeigt eine Prinzipdarstellung des Verfahrens zur rechnergestützten Bereitstellung von Materialien beim Aufzugsbau. **Fig. 1** zeigt eine Wertschöpfungskette bestehend aus Auftragsbearbeitung **0,** Fertigung **1,** Zustellung, **2,** Kommissionierung **3**, Lieferung **4**, Montage **5** und Wartung **6** von Materialien.

Die beim Aufzugsbau verwendeten Materialien sind vielfältiger Natur. So werden Materialien wie Führungsschienen, elektrische Antriebe, Kabinenkomponenten, Seile, Riemen, Steuerungskästen, usw. bereitgestellt. Die Materialien werden bei Zuliefern gefertigt, an Kommissionierungslager zugestellt, von dort auf Baustellen geliefert und in Aufzugsanlagen verbaut.

Vorteilhafterweise ist der Informationsgeber eine kontaktlose Chipkarte, mit in einem Datenspeicher gespeicherten Informationen, die von einer Lese/Schreibvorrichtung rechnergestützt gelesen bzw. geschrieben werden. Der Informationsgeber ist bspw. ein Transponder mit Transponderantenne und Geber-Elektronik. Der Informationsgeber wird durch Induktion über ein elektromagnetisches Feld mit einer Betriebsspannung gespeist. Ein solches elektromagnetisches Feld wird von der Lese/Schreibvorrichtung abgestrahlt. Sobald sich der Informationsgeber in der Nähe der Lese/Schreibvorrichtung befindet, wird er mit Energie versorgt und sendet über RF Informationen an die Lese/Schreibvorrichtung. Je nach Kartentyp werden Reichweiten der Kommunikation von einigen Zentimetern bis zu einem und mehren Metern realisiert. Die Lese/Schreibvorrichtung sendet bzw. empfängt die Informationen über eine entsprechend ausgebildete Sende- und Empfangsantenne. Die Lese/Schreibvorrichtung kann mobil bzw. stationär ausgebildet sein. Das Lesen/Schreiben erfolgt kontaktlos, auch durch Materialien bzw. Verpackungen hindurch.

Die Transponder unterteilen sich in passive und aktive Ausführungen, wobei die passiven ihre Energie ausschließlich durch das von der Lese/Schreibvorrichtung aufgebaute elektromagnetische Feld erhalten und aktive eine eigene Energieversorgung zur Verstärkung der per RF rückgesendeten Informationen besitzen, sowie in read-only, d.h. nur auslesbare, und in read-write, d.h. les- und schreibbare, Varianten. Die verschiedenen Systeme unterscheiden sich des Weiteren durch die benutzte RF, die Bauform ((Klebe-) Folie, Röhrchen, Plastikkarte o.ä.), die Reichweite beim Schreib-/ Lese-Vorgang und die Lesegeschwindigkeit. Grundinformation eines Transponders ist ein einprogrammierter, weltweit eindeutiger Nummerncode; je nach Ausführung speichern die Transponder weitere Informationen: z.B. bei read-write-Transpondern Speicherung von Datum und Zeit durch die Lese/Schreibvorrichtung. Folien-Transponder sind besonders vorteilhaft, da sie sich durch geringe Herstellungskosten, Elastizität der Folie, einfache Aufbringbarkeit, Unempfindlichkeit bei der Handhabung und relativ hohen Datenübertragungsraten auszeichnen. Insbesondere sind solche Folien-Tags weitgehend unempfindlich gegen Schmutz und Farbauftragung auf der Baustelle.

Bei Kenntnis der vorliegenden Erfindung lassen sich beliebige les- bzw. beschreibbare Informationsgeber respektive Lese/Schreibvorrichtungen realisieren. So sind Informationsgeber, die auf der Basis von Licht berührungslos mit einer Lese/Schreibvorrichtung wie ein Scanner kommunizieren, ebenfalls anwendbar. Auch sind Informationsgeber in Form von Magnetkarten, elektronischen Chips, usw., die über mindestens einen vermittelnden Kontakt mit einer Lese/Schreibvorrichtung kommunizieren, anwendbar.

Zur rechnergestützten Überprüfung der Informationen sind Angaben in einer Kontrollliste einer Datenbank gespeichert. Diese Angaben entsprechen den Informationen, bzw. diese Angaben und Informationen sind einander zugeordnet. Die Datenbank ist bspw. eine relationelle Datenbank.

Zum rechnergestützten Lesen/Schreiben der Informationen bzw. zur rechnergestützten Überprüfung der Informationen ist eine Auswerteeinheit vorgesehen. Bei der Auswerteeinheit handelt es sich um eine handelsübliche Recheneinheit mit Ein- und Ausgängen zur Kommunikation mit einer Lese/Schreibvorrichtung bzw. mit der Datenbank. Bspw. erfolgt die Kommunikation gemäss einem bekannten Standard-Protokoll wie dem Internet-Protokoll (TCP/IP) per Funk und/oder Kabel und/oder Telefon. Die Auswerteeinheit kann mobil bzw. stationär ausgebildet sein. Auswerteeinheit, Datenbank und Lese/Schreibvorrichtung können in einem einzigen Gehäuse integriert sein, sie können aber auch separat an verschiedenen Orten platziert sein.

Vorteilhafterweise ist in der Auswerteeinheit ein Computerprogrammprodukt installiert. Vorteilhafterweise arbeitet das Computerprogrammprodukt in mehreren Modi wie Konfigurationsmodus, Fertigungsmodus, Lagerhaltungsmodus, Lieferungsmodus, Montagemodus, Wartungsmodus, welche Modi den Stufen der Wertschöpfungskette entsprechen. Das Computerprogrammprodukt hat somit Zugriff auf gelesenen Informationen und auf die Angaben der Kontrollliste. Das Computerprogrammprodukt vergleicht gelesenen Informationen mit Angaben der Kontrollliste. Vorteilhafterweise erfolgt dieser Vergleich gemäss bekannter logischer Gatter wie UND, ODER, NICHT, usw..

In der Lese/Schreibvorrichtung bzw. in der Auswerteeinheit sind bekannte und bewährte Ein- und Ausgabemittel wie eine Anzeige, eine Tastatur, ein Lautsprecher, usw. integriert. Bei korrekter Identifikation bzw. bei Nichtübereinstimmung wird ein positives respektive negatives Antwortsignal bspw. optisch auf einem Monitor bzw. akkustisch über einen Lautsprecher ausgegeben. Das Antwortsignal kann auch in einer Ausgabe der gelesenen Informationen bestehen. Das Computerprogrammprodukt kann eine Anfrage durchführen. Die Ausgabe einer solchen Anfrage kann optisch auf dem Monitor erfolgen. Die Quittierung der Anfrage, bspw. mit JA/NEIN kann über eine Tastatur bzw. einen Monitor mit Funktionsflächen (Touch Screen) erfolgen.

Bei der Auftragsbearbeitung **0** werden Angaben bezüglich der benötigten Materialien, der Lieferfristen, der Anzahl bzw. Verteilung der Paletten, usw. in die Kontrollliste gespeichert Das Computerprogrammprodukt schreibt diese Angaben in einem Konfigurationsmodus in die Kontrollliste.

Vorteilhafterweise werden die Materialien bei der Fertigung **1** mit einem Informationsgeber versehen. Bspw. wird der Informationsgeber in die Materialien inkorporiert bzw. auf den Materialien aufgebracht. Der Informationsgeber weist einen Datenspeicher mit fertigungsrelevanten Informationen zur eindeutigen Zuordnung der Materialien wie Fertigungsnummer, Batchnummer, Fertigungstag, Fertigungsvariante, usw. auf. Diese Informationen werden zur Fertigungssteuerung verwendet und erlauben eine Überprüfung des Ablaufs der Fertigung **1** der Materialien. Insbesondere erlauben diese Informationen eine Qualitätskontrolle während der Fertigung **1** der Materialien.

Die Materialien werden bei der Fertigung **1** aus mehreren Komponenten zusammengesetzt. In der Kontrollliste stehen demgemäss Angaben wie, dass eine erste Komponente - die eine erste Fertigungsnummer aufweist - mit einer zweiten Komponente - die eine zweite Fertigungsnummer aufweist - zusammenzusetzen ist. Bei der Fertigung **1** werden die Fertigungsnummern gelesen und an die Auswerteeinheit übermittelt. Das Computerprogrammprodukt vergleicht in einem Fertigungsmodus die korrekte Zusammensetzung der Komponenten zu Materialien. Hierzu werden die gelesenen Fertigungsnummern mit der Kontrollliste verglichen. Bspw. wird die Reihenfolge der gelesenen Fertigungsnummern mit einer entsprechenden Reihenfolge von Fertigungsnummern in der Kontrollliste verglichen.

Vorteilhafterweise werden die gefertigten Materialien bei den Zulieferern verpackt und die Verpackungen mit Informationsgebern versehen. Bspw. wird der Informationsgeber in die Verpackungen inkorporiert bzw. auf den Verpackungen aufgebracht. In die Datenspeicher der Informationsgebern der Verpackungen werden zustellrelevanten Informationen über den Inhalt der Verpackungen geschrieben. Bspw. werden Informationen über Inhalt und Anzahl der Materialien, deren Fertigungsnummern, Batchnummern, Fertigungstage, Fertigungsvarianten, den voraussichtlichen Zustelltag, das Gewicht der Verpackungen, usw. gespeichert.

In einer Zustellung **2** werden die Verpackungen an Kommissionierungslager versendet. Vorteilhafterweise werden die Informationen beim Eingang in Kommissionierungslagern gelesen bzw. geschrieben. Vorteilhafterweise werden diese zustellrelevanten Informationen in der Kontrollliste gespeichert. Die Informationen sind weiterverarbeitbar. Bspw. vergleicht das Computerprogrammprodukt in einem Lagerhaltungsmodus die eingegangenen Materialien mit einer korrespondierenden Bestellung gemäss Kontrollliste. Dies erlaubt eine Kontrolle der Vollständigkeit der empfangenen Materialien. Auch aktualisiert das Computerprogrammprodukt die in den Datenspeichern der Materialien bzw. Verpackungen gespeicherten Informationen. Bspw. werden Informationen über den tatsächlichen Zustelltag sowie eine Lagernummer in die Datenspeicher der Informationsgeber geschrieben. Solche aktualisierten Informationen werden vorteilhafterweise ebenfalls als Angaben in der Kontrollliste gespeichert.

Vorteilhafterweise werden Materialien bzw. unausgepackte Materialien bei der Kommissionierung **3** aus dem Kommissionierungslager heraus zusammengestellt, um auf Paletten auf eine Baustelle geliefert zu werden. Vorteilhafterweise werden die Paletten mit Informationsgebern versehen. In den Datenspeicher des Informationsgebers einer Palette werden logistikrelevante Informationen geschrieben. Bspw. werden Informationen über die Kommissionsnummer, den Verteilort auf einer Baustelle, usw. gespeichert. Diese logistikrelevanten Informationen lassen sich natürlich auch in den Informationsgebern der Materialien bzw. Verpackungen der Paletten speichern. Vorteilhafterweise stellt das Computerprogrammprodukt die auszuliefernden Materialien gemäss der Kontrollliste zusammen und speichert diese logistikrelevanten Informationen als Angaben in der Kontrollliste.

Bei der Lieferung **4** auf die Baustelle werden die logistikrelevanten Informationen der Datenspeicher der Informationsgeber der Paletten gelesen und mit der Kontrolliste verglichen. Bspw. werden auf der Baustelle fünf Aufzugsanlagen an fünf Verteilorten installiert und für jede Aufzugsanlage werden zehn Paletten geliefert. Durch Erfassen der logistikrelevanten Informationen direkt bei der Lieferung lassen sich die fünfzig gelieferten Paletten sofort an den vorgesehenen Verteilorten platzieren und die Vollständigkeit der Lieferung kontrollieren, d.h. Mängel beim Kommissionierungslager reklamieren. Die logistikrelevanten Informationen werden gelesen und ausgegeben. Das Computerprogrammprodukt vergleicht in einem Lieferungsmodus die gelesenen Informationen mit Angaben der Kontrollliste. Eine Empfangsmeldung der Lieferung **4** kann - in Analogie zu einer Funk-Meldung (SMS) bzw. einer Internet-E-Mail - im Lieferungsmodus erfolgen. Vorteilhafterweise führt das Computerprogrammprodukt eine Anfrage aus, wie: bitte bestätigen Sie die Vollständigkeit der gelieferten Materialien? Die Anfrage wird quittiert.

Zur Montage **5** der Aufzugsanlage werden die in den Paletten angelieferten Materialien anhand der Information in den Datenspeichern der Informationsgeber in den Paletten eindeutig identifiziert. Diese Informationen werden zur Montagesteuerung verwendet und erlauben eine Überprüfung des Ablaufs der Montage **5** der Aufzugsanlage. Insbesondere erlauben diese Informationen eine Qualitätskontrolle während der Montage 5 der Aufzugsanlage.

Die Aufzugsanlage wird unter Verwendung von mehreren Materialien installiert. In der Kontrollliste stehen demgemäss Angaben wie, dass ein erstes Material - das eine erste Fertigungsnummer aufweist - mit einem zweiten Material - das eine zweite Fertigungsnummer aufweist - zusammenzusetzen ist. Bei der Montage **5** werden die Fertigungsnummern gelesen und an die Auswerteeinheit übermittelt. Das Computerprogrammprodukt vergleicht in einem Fertigungsmodus die korrekte Zusammensetzung der Materialien. Hierzu werden die gelesenen Fertigungsnummern mit der Kontrollliste verglichen. Bspw. wird die Reihenfolge der gelesenen Fertigungsnummern mit einer entsprechenden Reihenfolge von Fertigungsnummern in der Kontrollliste verglichen. Durch Übermittlung der Informationen an eine Zentraleinheit ist es möglich, den Baufortschritt zu überwachen und Personaleinsatzplanungen zu aktualisieren.

Zur Wartung **6** der Aufzugsanlage werden die Informationen in den Datenspeichern der Informationsgeber der verbauten Materialien gelesen und mit der Kontrollliste verglichen. Vorteilhafterweise werden alle für die Wartung bzw. den Ersatz und eine Nachbestellung wichtigen Informationen als wartungsrelevante Informationen in den Datenspeicher geschrieben. Bspw. werden die Fertigungsnummern, Fertigungstage, Fertigungsvarianten der Materialien gelesen. Das Computerprogrammprodukt vergleicht in einem Wartungsmodus die gelesenen Informationen mit Angaben der Kontrollliste. Vorteilhafterweise enthält die Kontrollliste eine Anlagedokumentation bzw. kommuniziert mit einer Anlagedokumentation. Defekte Materialien bzw. Komponenten lassen sich so eindeutig identifizieren und die richtigen Ersatzteile lassen sich automatisch nachbestellen. Vorteilhafterweise erfolgt die Nachbestellung im Wartungsmodus. Das Computerprogrammprodukt führt bspw. eine Anfrage aus, wie: wollen Sie diese als defekt identifizierten Materialien nachbestellen? Die Anfrage wird quittiert.

## Patentansprüche

1. Verfahren zur rechnergestützten Bereitstellung von Materialien beim Aufzugsbau, **dadurch gekennzeichnet,**
**dass** logistikrelevante Informationen als Angaben bezüglich der beim Aufzugsbau benötigten Materialien in einer Kontrollliste einer Datenbank gespeichert werden,
**dass** bereitzustellende Materialien mit einem les- bzw. beschreibbaren Informationsgeber mit einem Datenspeicher versehen werden,
**dass** die Materialien bereitgestellt werden,
**dass** logistikrelevante Informationen rechnergestützt in den Datenspeicher der Informationsgeber geschrieben werden,
**dass** die bereitgestellten Materialien auf eine Baustelle geliefert werden,
**dass** auf der Baustelle logistikrelevante Informationen rechnergestützt aus dem Datenspeicher des Informationsgebers gelesen werden,
**dass** diese Informationen rechnergestützt überprüft werden, und
**dass** die gelieferten Materialien mittels der gelesen logistikrelevanten Informationen an vorgesehenen Verteilplätzen platziert werden.

2. Verfahren gemäss Anspruch 1, **dadurch gekennzeichnet, dass** einzelne Materialien und/oder eine Verpackung von Materialien und/oder eine Palette von bereitgestellten Materialien mit einem Informationsgeber versehen wird/werden.

3. Verfahren gemäss Anspruch 1 oder 2, **dadurch gekennzeichnet, dass** die Vollständigkeit der zur Baustelle gelieferten Materialien mittels der gelesenen logistikrelevanten Informationen mit den Angaben der Kontrollliste rechnergestützt überprüft wird.

4. Verfahren gemäss einem der Ansprüche 1 bis 3, **dadurch gekennzeichnet, dass** eine Reihenfolge von Fertigungsnummern in der Kontrollliste der Datenbank gespeichert wird, und dass fertigungsrelevante Informationen in den Datenspeicher des Informationsgebers geschrieben werden.

5. Verfahren gemäss Anspruch 4, **dadurch gekennzeichnet, dass** fertigungsrelevanten Informationen von an die Baustelle gelieferten Materialien aus Datenspeichern der Informationsgeber gelesen werden, und dass die Materialien mittels der gelesenen fertigungsrelevanten Informationen identifiziert und zusammengesetzt werden.

6. Verfahren gemäss Anspruch 5, **dadurch gekennzeichnet, dass** ein erstes Material mit einer ersten Fertigungsnummer identifiziert wird, dass ein zweites Material mit einer zweiten Fertigungsnummer identifiziert wird, und dass die gelesenen Fertigungsnummern mit der Kontrollliste verglichen werden und dass diese Materialien korrekt zusammengesetzt werden.

7. Verfahren gemäss Anspruch 6, **dadurch gekennzeichnet, dass** eine Reihenfolge der gelesenen fertigungsrelevanten Informationen mit einer entsprechenden Reihenfolge in der Kontrollliste verglichen wird und der Baufortschritt überwacht wird.

8. Verfahren gemäss Anspruch 1, **dadurch gekennzeichnet, dass** an einer Aufzugsanlage wartungsrelevante Informationen in die Informationsgeber der verbauten Materialien geschrieben werden, dass die wartungsrelevanten Informationen von defekten verbauten Materialien gelesen werden, und dass defekte verbaute Materialien mittels der gelesenen wartungsrelevanten Informationen der Informationsgeber identifiziert und nachbestellt werden.

9. System zur rechnergestützten Bereitstellung von Materialien beim Aufzugsbau, **dadurch gekennzeichnet,**
**dass** in einer Kontrollliste einer Datenbank logistikrelevante Informationen als Angaben bezüglich der beim Aufzugsbau benötigten Materialien gespeichert sind,
**dass** bereitzustellende Materialien mit einem les- bzw. beschreibbaren Informationsgeber mit einem Datenspeicher versehen sind,
**dass** eine Lese/Schreibvorrichtung logistikrelevante Informationen rechnergestützt in den Datenspeicher der Informationsgeber schreibt,
**dass** auf der Baustelle eine Lese/Schreibvorrichtung logistikrelevante Informationen rechnergestützt aus dem Datenspeicher des Informationsgebers liest, und
**dass** eine Auswerteeinrichtung die gelesenen logistikrelevanten Informationen mit den Angaben der Kontrollliste rechnergestützt überprüft.

10. System gemäss Anspruch 9, **dadurch gekennzeichnet, dass** die Auswerteeinheit bzw. die Lese/Schreibvorrichtung als Prüfergebnis ein positives bzw. negatives Antwortsignal ausgibt.

11. System gemäss Anspruch 9, **dadurch gekennzeichnet, dass** der Informationsgeber eine kontaktlose Chipkarte ist, mit in einem Datenspeicher gespeicherten Informationen, die eine Lese/Schreibvorrichtung liest und/oder dass der Informationsgeber ein Folien-Transponder ist, mit in einem Datenspeicher gespeicherten Informationen, die eine Lese/Schreibvorrichtung per RF liest und/oder dass der Informationsgeber ein Folien-Transponder ist, der über keine eigenen Energieversorgung verfügt.

## Claims

1. Method for computer-assisted furnishing of materials in lift construction, **characterised in that** logistically relevant data are stored in a checklist of a databank as details with respect to materials needed in lift construction, that materials to be furnished are provided with a readable or writable data transmitter with a data memory, that the materials are furnished, that logistically relevant data are written with computer assistance into the data memory of the data transmitter, that the furnished materials are delivered to a construction site, that logistically relevant data are read out of the data memory of the data transmitter with computer assistance at the construction site, that these data are checked with computer assistance and that the supplied materials are placed by means of the read logistically relevant data at intended distribution locations.

2. Method according to claim 1, **characterised in that** individual materials and/or packaging of materials and/or a pallet of furnished materials is or are provided with a data transmitter.

3. Method according to claim 1 or 2, **characterised in that** the completeness of the materials supplied to the construction site is checked with computer assistance with the details of the checklist by means of the read logistically relevant data.

4. Method according to any one of claims 1 to 3, **characterised in that** a sequence of production numbers is stored in the checklist of the databank and that data relevant to production are written into the data memory of the data transmitter.

5. Method according to claim 4, **characterised in that** production-relevant data of materials supplied to the construction site are read from data memories of the data transmitter and that the materials are identified and assembled by means of the read production-relevant data.

6. Method according to claim 5, **characterised in that** a first material with a first production number is identified, that a second material with a second production number is identified and that the read production numbers are compared with the checklist and that these materials are correctly assembled.

7. Method according to claim 6, **characterised in that** a sequence of the read production-relevant data is compared with a corresponding sequence in the checklist and the progress of construction is monitored.

8. Method according to claim 1, **characterised in that** maintenance-relevant data are written into the data transmitter of the utilised materials at a lift installation, that the maintenance-relevant data of defective utilised materials are read and that defective utilised materials are identified and reordered by means of the read maintenance-relevant data of the data transmitter.

9. System for computer-assisted furnishing of materials in lift construction, **characterised in that** logistically relevant data are stored in a checklist of a databank as details with respect to the materials needed in lift construction, that materials to be furnished are provided with a readable or writable data transmitter with a data memory, that a reading/writing device writes logistically relevant data with computer assistance into the data memory of the data transmitter, that a reading/writing device reads logistically relevant data out of the data memory of the data transmitter at the construction site with computer assistance and that an evaluating device checks the read logistically relevant data with the details of the checklist with computer assistance.

10. System according to claim 9, **characterised in that** the evaluating unit or the reading/writing device issues a positive or negative response signal as check result.

11. System according to claim 9, **characterised in that** the data transmitter is a contactless chip card with data which are stored in a data memory and which a reading/writing device reads and/or that the data transmitter is a film transponder with data which are stored in their data memory and which a reading/writing device reads by radio frequency and/or that the data transmitter is a film transponder without an own energy supply.

## Revendications

1. Méthode pour la mise à disposition de matériaux lors de la construction d'ascenseurs,
**caractérisée en ce que**
les informations pertinentes du point de vue de la logistique sont mémorisées dans une liste de contrôle d'une banque de données en tant qu'indications quant aux matériaux nécessaire lors de la construction d'ascenseurs,
les matériels à mettre à disposition avec un transmetteur d'informations lisible et/ou inscriptible sont équipés d'une mémoire d'informations,
les matériaux sont mis à disposition,
les informations pertinentes du point de vue de la logistique sont enregistrées, par ordinateur, dans la mémoire d'informations du transmetteur d'informations,
les matériaux mis à disposition sont livrés sur un chantier
les informations pertinentes du point de vue de la logistique sont lues par ordinateur, sur le chantier, à partir d'une mémoire d'informations du transmetteur d'informations,
ces informations sont vérifiées par ordinateur et
les matériaux livrés sont placés à plusieurs endroits de distribution prévus à l'aide des informations lues pertinentes du point de vue de la logistique.

2. Méthode selon la revendication 1, **caractérisée en ce que** des matériaux isolés et/ou un emballage de matériaux et/ou une palette de matériaux mis à disposition est/sont équipé(s) d'un transmetteur d'informations.

3. Méthode selon la revendication 1 ou 2, **caractérisée en ce que** l'intégralité des matériaux livrés au chantier sont vérifiés par ordinateur avec les indications de la liste de contrôle, à l'aide des informations lues pertinentes du point de vue de la logistique.

4. Méthode selon une des revendications de 1 à 3, **caractérisée en ce que** une séquence de numéros de fabrication est mémorisée dans la liste de contrôle de la banque de données et que des informations pertinentes du point de vue de la fabrication sont écrites dans la mémoire d'informations du transmetteur d'informations.

5. Méthode selon la revendication 4, **caractérisée en ce que** des informations pertinentes du point de vue de la fabrication de matériaux livrés au chantier sont lues à partir de la mémoire d'informations du transmetteur d'informations et que les matériaux sont identifiés et assemblés à l'aide des informations lues pertinentes du point de vue de la fabrication.

6. Méthode selon la revendication 5, **caractérisée en ce que** un premier matériau avec un premier numéro de fabrication est identifié, qu'un deuxième matériau avec un deuxième numéro de fabrication est identifié et que les numéros de fabrication lus sont comparés avec la liste de contrôle et que ces matériaux sont assemblés correctement.

7. Méthode selon la revendication 6, **caractérisée en ce qu'**une séquence d'informations lues pertinentes du point de vue de la fabrication sont comparées avec une séquence correspondante dans la liste de contrôle et que l'avancement des travaux est supervisé.

8. Méthode selon la revendication 1, **caractérisée en ce que** dans une installation d'ascenseur des informations pertinentes du point de vue de l'entretien sont inscrites dans le transmetteur d'informations des matériaux montés, que les informations pertinentes du point de vue de l'entretien des matériaux défectueux montés sont lues et que les matériaux défectueux montés sont identifiés et re-commandés à l'aide des informations lues pertinentes du point de vue de l'entretien.

9. Système de mise à disposition de matériaux assistée par ordinateur lors de la construction d'ascenseurs, **caractérisée en ce que**
des informations pertinentes du point de vue de la logistique sont mémorisées dans une liste de contrôle d'une base de données en tant qu'indications quant aux matériaux nécessaires lors de la construction d'ascenseurs,
les matériaux à mettre à disposition avec un transmetteur d'informations lisible et/ou inscriptible sont pourvus d'une mémoire d'informations,
un dispositif de lecture / d'écriture inscrit, par ordinateur, des informations pertinentes du point de vue de la logistique dans la mémoire d'informations du transmetteur d'information,
un dispositif de lecture / d'écriture lit, par ordinateur sur un chantier, des informations pertinentes du point de vue de la logistique, à partir d'une mémoire d'informations du transmetteur d'informations et
une unité d'évaluation vérifie par ordinateur les informations lues pertinentes du point de vue de la logistique avec les indications de la liste de contrôle.

10. Système selon la revendication 9, **caractérisée en ce que** l'unité d'évaluation et/ou le dispositif de lecture / d'écriture émet un signal de réponse positif et/ou négatif en tant que résultat du test.

11. Système selon la revendication 9, **caractérisée en ce que** le transmetteur d'informations est une puce sans contact avec des informations mémorisées dans une mémoire d'informations qui sont lues par un dispositif de lecture / d'écriture et/ou que le transmetteur d'informations est un transpondeur - feuille avec des informations mémorisées dans une mémoire d'informations qui sont lues par un dispositif de lecture / d'écriture par fréquence radio et/ou que le transmetteur d'informations est un transpondeur - feuille qui ne dispose d'aucune alimentation propre en énergie.
